# FASCICULE DE BREVET EUROPEEN

(11) **EP 1 065 103 B1**
(45) Date de publication et mention de la délivrance du brevet: **16.04.2003**
(21) Numéro de dépôt: 00401858.6
(22) Date de dépôt: 29.06.2000
(51) Int. Cl.: B60R 7/04, B60N 3/10

(54) **Compartiment de rangement d'objets disposé dans un véhicule automobile**
Ablage zur Verwendung in Kraftfahrzeuge
Vehicle storage compartment

(30) Priorité: 02.07.1999 FR 9908577
(43) Date de publication de la demande: 03.01.2001
(73) Titulaire: Peugeot Citroen Automobiles SA, 92200 Neuilly sur Seine (FR)
(72) Inventeur: Ray, Paul, 78220 Viroflay (FR)
(74) Mandataire: Thinat, Michel

(56) Documents cités:
- US-A- 5 170 980
- US-A- 5 509 633
- US-A- 5 878 986
- US-A- 5 921 519
- PATENT ABSTRACTS OF JAPAN vol. 1995, no. 02, 31 mars 1995 (1995-03-31) & JP 06 320997 A (NISSAN MOTOR CO LTD), 22 novembre 1994 (1994-11-22)
- PATENT ABSTRACTS OF JAPAN vol. 1999, no. 02, 26 février 1999 (1999-02-26) & JP 10 297346 A (FUJI HEAVY IND LTD;NIFCO INC), 10 novembre 1998 (1998-11-10)

## Description

La présente invention concerne un dispositif formant compartiment de rangement d'objets, tels que lunettes, téléphones portables, gobelets, canettes, pièces de monnaie, clefs ou analogues, disposé dans un véhicule automobile, de préférence dans la console centrale située entre les deux sièges avant de ce véhicule.

Actuellement, les véhicules automobiles sont équipés de deux ou plusieurs dispositifs de rangement distincts ayant chacun une fonction spécifique, par exemple, de rangement de pièces de monnaie, de lunettes, de téléphones portables ou d'autres objets de dimensions comparables, ou de support de récipients tels que par exemple de petites bouteilles du genre canettes et des gobelets de boisson.

Ces dispositifs connus sont conçus de façon à pouvoir être utilisés aussi bien pendant la marche du véhicule qu'à l'arrêt de celui-ci et sont par conséquent relativement complexes, occupent un espace non négligeable dans le véhicule d'autant plus qu'il faut prévoir autant de dispositifs distincts que de fonctions de rangement souhaitées, et sont relativement coûteux.

Le document US 5 878 986 A divulgue un dispositif correspondant au préambule de la revendication 1.

La présente invention propose un dispositif formant compartiment de rangement multifonctions, c'est-à-dire pouvant recevoir divers objets différents et qui est d'un coût relativement faible.

A cet effet, selon l'invention, le dispositif formant compartiment de rangement d'objets, tels que lunettes, téléphones portables, gobelets, canettes, pièces de monnaie, clefs ou analogues, disposé dans un véhicule automobile et débouchant en partie supérieure, le dispositif étant tel qu'il comprend une pièce profilée déplaçable dans le compartiment entre une position saillante de séparation du compartiment en au moins deux espaces de rangement ou de support distincts et une position escamotée de libération de tout l'espace de rangement du compartiment.

De préférence, la pièce profilée est amenée manuellement à sa position escamotée par pression exercée sur celle-ci à l'encontre de la force de rappel d'un moyen élastique et comprend un moyen de verrouillage à sa position escamotée.

Le moyen de verrouillage est déverrouillable manuellement par pression.

La pièce profilée est déplaçable suivant une direction perpendiculaire à la paroi de fond du compartiment.

La partie supérieure de la pièce profilée est en affleurement avec la paroi de fond du compartiment en position escamotée de la pièce profilée qui, de préférence, est en forme de bouton poussoir.

Avantageusement, la paroi de fond du compartiment est recouverte d'un tapis en matériau à base de caoutchouc comportant une découpe de passage de la pièce profilée.

Cette pièce profilée présente en section transversale une forme sensiblement triangulaire ou, selon une variante de réalisation, une forme sensiblement carrée.

Le compartiment est de forme rectangulaire, carrée, circulaire ou triangulaire.

La pièce profilée peut être disposée au centre du compartiment de façon à définir quatre espaces de rangement ou de support distincts.

Selon un mode de réalisation préféré, la pièce profilée est montée mobile dans un boîtier fixé sous la paroi de fond du compartiment et comprend des organes de guidage du déplacement relatif de la pièce profilée, et au moins une butée de limitation du déplacement de la partie profilée à sa position saillante dans le compartiment, le moyen élastique de rappel étant interposé entre la pièce profilée et le boîtier.

Avantageusement, les organes de guidage sont constitués par deux colonnes parallèles montées à coulissement respectivement dans des cylindres de guidage du boîtier et le moyen élastique de rappel comprend deux ressorts hélicoïdaux montés concentriquement respectivement aux deux paires de colonnes et de cylindres associées.

Le moyen de verrouillage est constitué par un téton solidaire de la paroi supérieure de la pièce profilée et ayant une extrémité libre conformée de façon à s'accrocher dans une partie à pince d'accrochage solidaire du boîtier, en position escamotée de la pièce profilée.

Selon un autre mode de réalisation, la pièce profilée est montée mobile dans un évidement de forme conjuguée situé sous la paroi de fond du compartiment et comprend au moins deux butées de limitation de la course de la pièce à sa position saillante, le moyen élastique de rappel étant interposé entre la pièce profilée et le fond de l'évidement.

Le moyen de verrouillage comprend un noyau fixe logé dans la pièce profilée en partie supérieure de celle-ci et coopérant avec une tige de verrouillage montée pivotante relativement au compartiment à son extrémité inférieure opposée à la pièce profilée de façon à permettre à l'extrémité supérieure de la tige d'accrocher le noyau fixe pour maintenir la pièce profilée à sa position escamotée.

Le dispositif peut être monté dans la console centrale située entre les deux sièges avant du véhicule.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :

La figure 1 est une vue partielle en perspective représentant le dispositif formant compartiment de rangement conforme à l'invention et conformé de façon à prévoir un espace de rangement maximum.

La figure 2 est une vue semblable à celle de la figure 1 et montrant la présence d'une pièce profilée faisant saillie dans le compartiment du dispositif pour séparer celui-ci en deux espaces de rangement.

La figure 3 est une vue de dessus suivant la flèche I du dispositif de la figure 1.

La figure 4 est une vue partielle en coupe suivant la ligne IV-IV de la figure 1 et permettant le logement d'un téléphone portable.

La figure 5 est une vue partielle en coupe suivant la ligne V-V du dispositif de la figure 2 et dont les deux espaces du compartiment servent respectivement au support d'une canette et au logement de clefs.

La figure 6 est une vue en coupe semblable à celle de la figure 5 et montrant le dispositif permettant de supporter dans ses deux espaces distincts respectivement deux canettes.

Les figures 7 à 10 représentent un mode de réalisation du dispositif formant compartiment de rangement ou de support de l'invention.

La figure 11 est une vue agrandie de la partie cerclée en XI de la figure 7.

La figure 12 est une vue agrandie de la partie cerclée en XII de la figure 8.

La figure 13 est une vue en perspective agrandie du boîtier représenté aux figures 7 à 10 et servant de logement à la pièce profilée en forme de bouton poussoir.

La figure 14 est une vue en perspective du bouton poussoir.

La figure 15 représente un autre mode de réalisation du dispositif formant compartiment de rangement ou de support de l'invention.

La figure 16 est une vue partielle en coupe transversale du dispositif de la figure 15 où le bouton poussoir occupe sa position saillante de séparation du compartiment en deux espaces.

La figure 17 est une vue partielle en coupe semblable à celle de la figure 16 et représentant le bouton poussoir en position escamotée verrouillée au fond du compartiment.

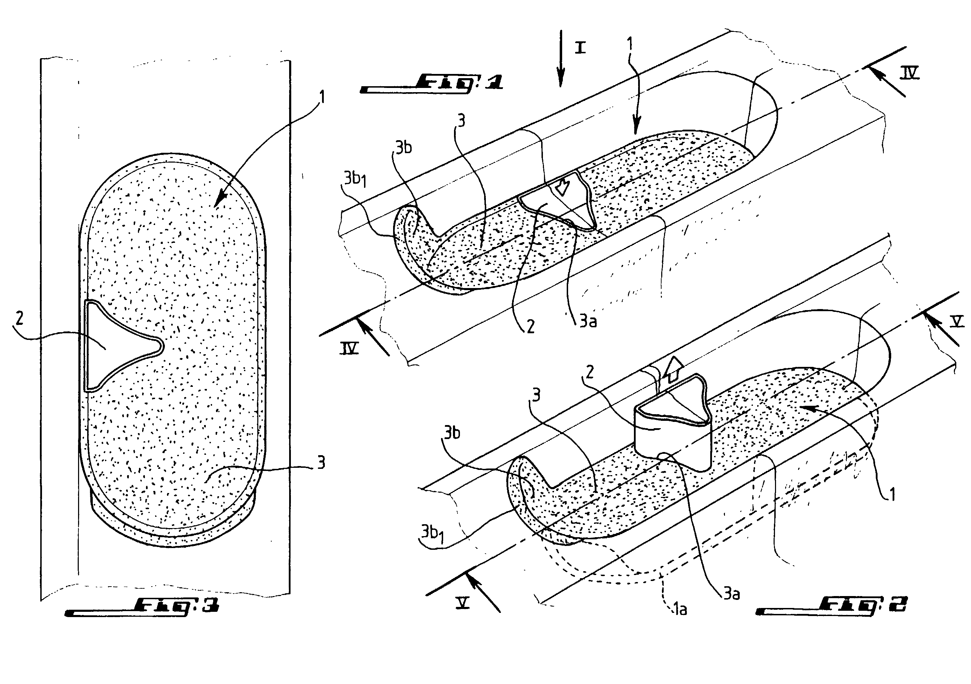

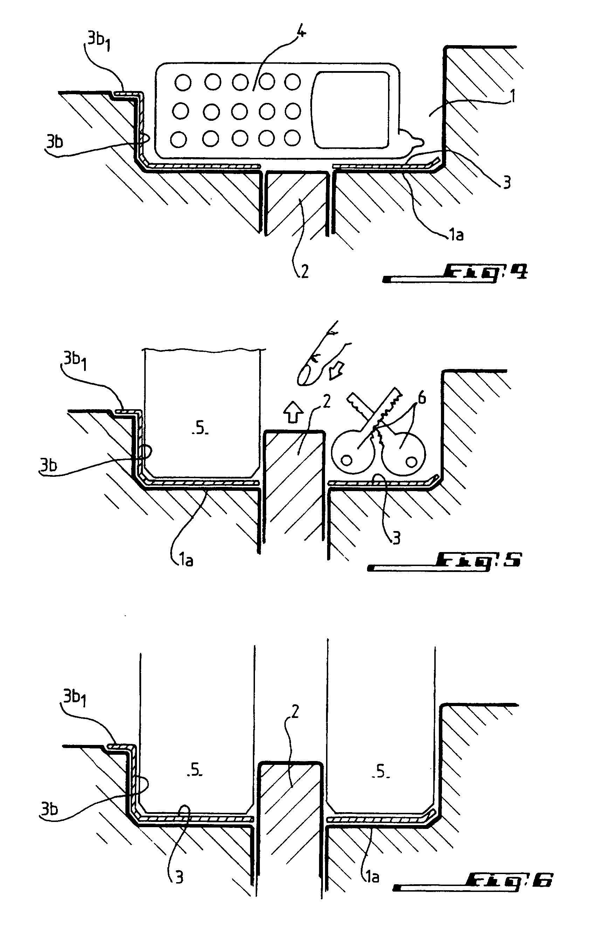

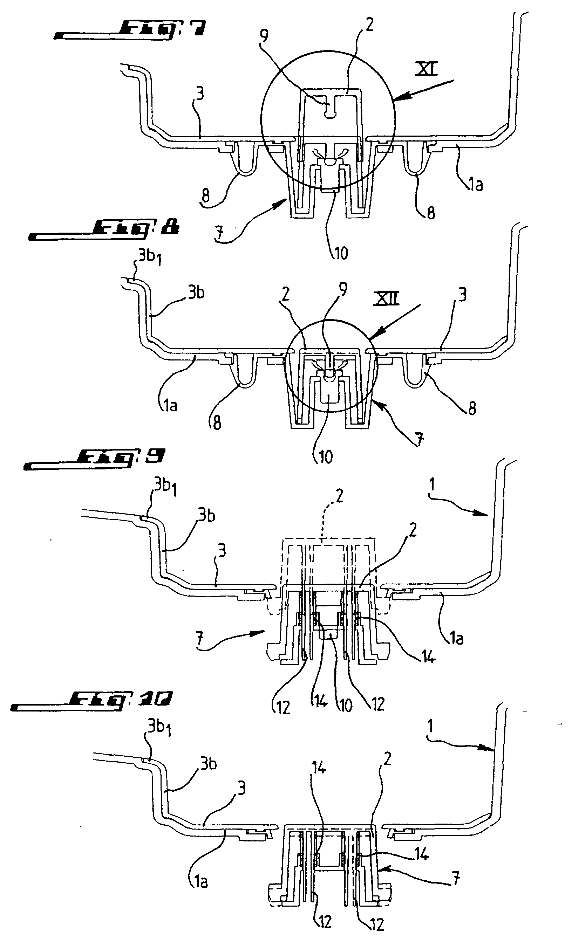

Les figures 1 à 6 représentent le dispositif de l'invention formant compartiment de rangement ou de support de divers objets, tels que par exemple une paire de lunettes, un téléphone portable, des pièces de monnaie, des clefs, des gobelets, des canettes ou analogues et qui est disposé dans l'habitacle d'un véhicule automobile, de préférence dans la console centrale généralement située entre les deux sièges avant du véhicule.

Le compartiment 1 de ce dispositif, qui est ouvert à sa partie supérieure, présente une forme oblongue, mais il est bien entendu qu'il peut avoir une autre forme différente, telle que par exemple une forme rectangulaire, carrée ou circulaire.

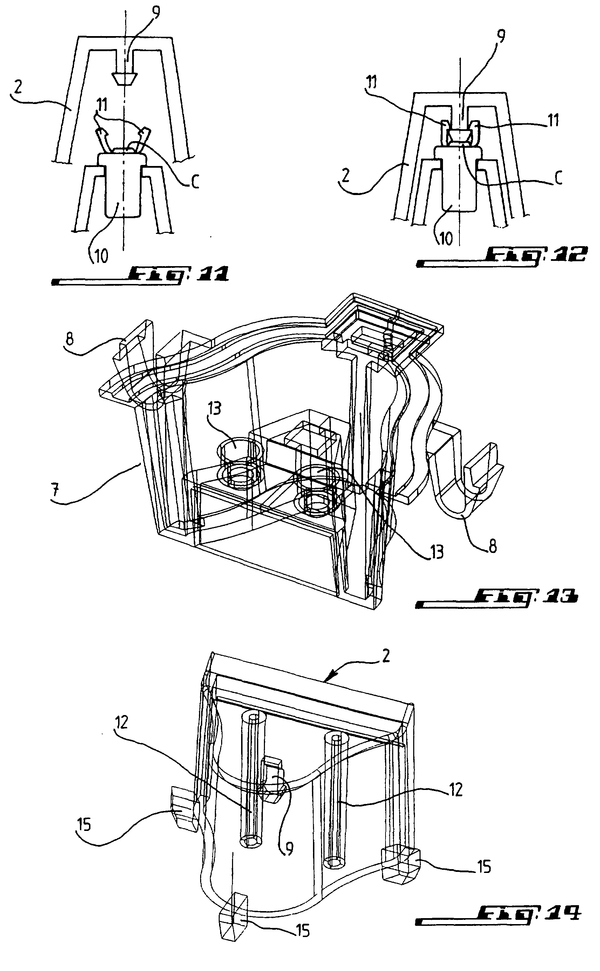

En tout cas, le dispositif comprend une pièce profilée 2 formant bouton poussoir pouvant être déplacée dans le compartiment 1 entre une position saillante de séparation du compartiment 1 en deux espaces de rangement ou de support distincts comme représenté en figure 2 et une position escamotée de libération de tout l'espace de rangement de ce compartiment comme représenté en figure 1.

Le bouton poussoir 2 est ainsi amené manuellement à sa position escamotée sensiblement en affleurement avec le fond la du compartiment 1 par une simple pression exercée sur celui-ci à l'encontre de la force de rappel d'un moyen élastique, qui sera défini ultérieurement, et comprend un moyen de verrouillage déverrouillable manuellement, qui sera également décrit ultérieurement, du bouton poussoir à sa position escamotée.

Comme représenté, le bouton poussoir 2 présente en section transversale une forme sensiblement triangulaire à angles arrondis, mais il peut présenter toute autre forme, telle que par exemple une forme sensiblement carrée à angles arrondis, dès l'instant que ce bouton poussoir puisse être enfoncé suivant une direction perpendiculaire à la paroi de fond la du compartiment 1.

Les figures 1 à 3 montrent que le fond la du compartiment 1 est recouvert d'un tapis 3 en matériau à base de caoutchouc et comportant une découpe 3a permettant le passage du bouton poussoir 2. Le tapis 3 permet d'éviter à un objet logé dans l'espace de rangement du compartiment 1 de glisser dans ce compartiment et peut, à cet effet, être également pourvu de petits picots ou autres saillies analogues. Outre sa fonction de protection, le tapis permet d'assurer une stabilité de récipients supportés dans les deux espaces de rangement distincts définis par le bouton poussoir 2 en position haute et peut comporter à l'une de ses extrémités une partie de prolongement 3b recouvrant la paroi d'extrémité correspondante du compartiment 1 et ayant un rebord 3b1 rabattu sur le bord d'extrémité correspondant délimitant l'ouverture supérieure du compartiment 1, de façon à permettre à un utilisateur de saisir manuellement la partie 3b pour retirer le tapis du fond du compartiment et permettre le nettoyage de celui-ci.

Les figures 4 à 6 montrent à titre d'exemple quelques possibilités d'utilisation du dispositif formant compartiment de l'invention.

Ainsi, la figure 4 représente le bouton poussoir 2 en position escamotée verrouillée au fond la du compartiment 1 pour permettre le rangement d'un téléphone portable 4.

La figure 5 représente le bouton poussoir 2 en position saillante définissant les deux espaces de rangement distincts dans lesquels sont logées respectivement une petite bouteille d'eau 5 ou autre canette et des clefs 6. La figure 6 est une vue du dispositif formant compartiment identique à celle de la figure 5 et dans les deux espaces distincts duquel sont supportées respectivement deux bouteilles d'eau ou autre canettes 5.

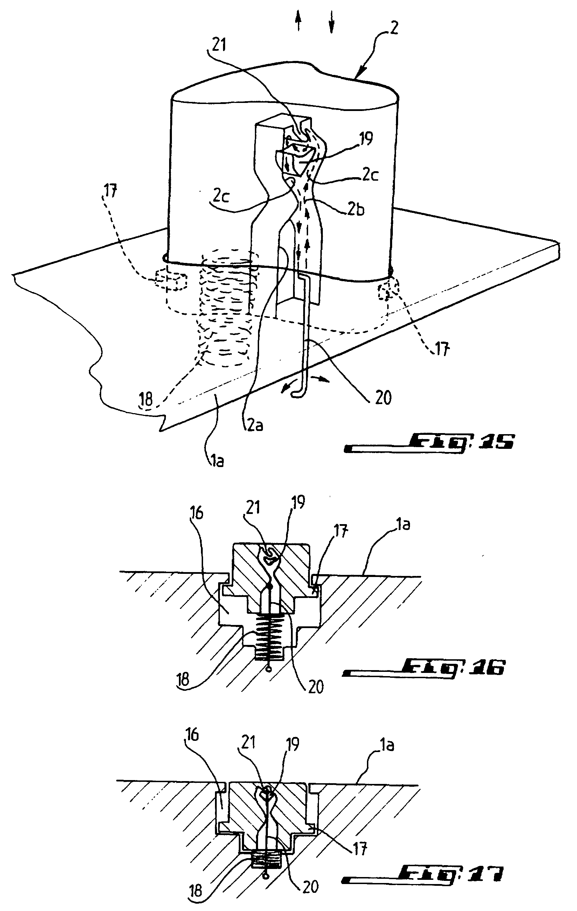

Les figures 7 à 12 représentent un premier mode de réalisation du dispositif de l'invention.

Selon ce mode de réalisation, la pièce profilée 2 formant bouton poussoir est montée axialement mobile dans un boîtier 7 fixé sous la paroi de fond la du compartiment 1. De préférence, le boîtier 7 comporte des languettes latérales flexibles 8 s'accrochant élastiquement par encliquetage dans l'ouverture correspondante de la paroi de fond la du compartiment 1 pour permettre une fixation amovible du boîtier 7 à la paroi 1a.

Le bouton poussoir 2 comprend un téton central 9 faisant saillie dans le bouton à partir de sa paroi supérieure et ayant une extrémité libre bombée permettant la fixation du téton 9 par verrouillage à un corps 10 solidaire du boîtier 7 coaxialement au téton 9.

Les figures 11 et 12 représentent plus précisément le téton 9 et le corps de verrouillage 10 qui comporte deux éléments 11 constituant une pince et pouvant occuper une position écartée l'un de l'autre lorsque le bouton poussoir 2 est en position saillante de séparation du compartiment 5 en deux espaces ou une position rapprochée l'un de l'autre pour verrouiller par accrochage l'extrémité bombée du téton 9 en position escamotée du bouton poussoir 2. Ainsi, lorsque le bouton poussoir 2 est enfoncé de sa position saillante à sa position escamotée, le téton 9 engage un curseur C à l'encontre de la force de rappel d'un ressort (non représenté) logé dans le corps 10 de façon à provoquer le rapprochement des deux éléments de pince 11 pour assurer le verrouillage du téton 9 au corps 10. Lorsqu'on exerce à nouveau une pression d'enfoncement du bouton poussoir 2 occupant sa position escamotée, on provoque un écartement des deux éléments de pince 11 pour libérer le bouton poussoir 2.

Le bouton poussoir 2 comprend, comme représenté en figure 14, deux colonnes parallèles de guidage 12 logées dans le bouton 2 en étant solidaires à leurs extrémités supérieures de la paroi supérieure de ce bouton. Les deux colonnes de guidage 12 sont montées à coulissement respectivement dans deux parties de cylindre de guidage 13 du boîtier 7 et un organe élastique 14, tel qu'un ressort hélicoïdal, est monté concentriquement à chaque colonne de guidage 12 et chaque partie de cylindre 13 en ayant sa spire extrême supérieure en appui sur la paroi supérieure du bouton poussoir 2 et sa spire extrême inférieure en appui sur un épaulement circulaire radialement interne du cylindre de guidage correspondant 13 de façon à rappeler le bouton poussoir 2 à sa position haute saillante dans le compartiment 1. Le bouton poussoir 2 comprend en outre plusieurs butées 15 de limitation de la course du bouton poussoir 2, dans le cas présent au nombre de trois, et venant en appui sous la paroi de fond la du compartiment 1.

Les figures 15 et 17 représentent le second mode de réalisation du dispositif de l'invention.

Selon ce mode de réalisation, la pièce profilée en forme de bouton poussoir 2 est montée mobile dans un évidement de forme conjuguée 16 réalisé sous la paroi de fond la du compartiment et comprend deux butées 17 sensiblement opposées de limitation de la course du bouton poussoir 2 et venant en appui sur un rebord correspondant de la paroi de fond 1a. Un organe élastique 18, tel qu'un ressort hélicoïdal, est interposé entre le fond de l'évidement de réception 16 du bouton poussoir 2 et l'extrémité inférieure de ce dernier.

Le bouton poussoir 2 comprend également un élément formant noyau 19 solidaire du corps du bouton 2 et logé dans celui-ci à sa partie supérieure et qui coopère avec une tige de verrouillage 20 pour permettre le verrouillage du bouton poussoir 2 à sa position escamotée dans le compartiment et la libération de celui-ci par simple pression exercée sur le bouton poussoir 2.

Plus précisément, la tige de verrouillage 20, qui a son extrémité inférieure reliée pivotante relativement au compartiment du dispositif de façon à permettre à la tige 20 de pivoter dans un plan perpendiculaire à la paroi de fond la et parallèle à la direction longitudinale de l'ouverture de ce compartiment, a également son extrémité supérieure recourbée pouvant s'engager dans le logement du noyau 19 lorsque le bouton poussoir 2 est enfoncé jusqu'à ce que l'extrémité recourbée de la tige 20 vienne en appui de façon guidée sur la face supérieure évasée de retenue du noyau 19. Pour cela, le corps du bouton poussoir 2 comporte un perçage de guidage longitudinal 2a de la tige 20 ayant une partie d'étranglement 2b en communication avec le logement du noyau 19, lequel logement comporte deux parois formant rampes divergeantes 2c décalées axialement et servant de guidage de l'extrémité supérieure de la tige 20. Le logement du noyau 19 comporte à sa paroi d'extrémité supérieure une cloison recourbée vers la droite par rapport à la figure 15 de façon que, lorsque l'extrémité recourbée supérieure de la tige 20 est engagée sur le noyau 19 en position escamotée du bouton poussoir 2, l'enfoncement ultérieur du bouton 2 amène l'extrémité recourbée de la tige 20 à contacter la cloison 21 qui permet le désengagement de l'extrémité recourbée de la tige 20 du noyau 19 et, par conséquent, le déverrouillage du bouton poussoir 2. Bien entendu, en position escamotée du bouton poussoir 2, le ressort 18 exerce un effort dirigé vers le haut sur le bouton poussoir 2 pour maintenir l'extrémité recourbée de la tige 20 en position d'accrochage sur le noyau 19.

Le dispositif de l'invention permet ainsi de transformer très simplement un compartiment de rangement d'objets de grande dimension en espaces de rangement ou de support d'autres objets.

## Revendications

1. Dispositif formant compartiment de rangement ou de support d'objets tels que lunettes, téléphones portables, pièces de monnaie, clefs, gobelets, canettes ou analogues, disposé dans un véhicule automobile et débouchant en partie supérieure, le dispositif étant tel qu'il comprend une pièce profilée (2) déplaçable dans le compartiment (1) entre une position saillante de séparation du compartiment (1) en au moins deux espaces de rangement ou de support distincts et une position escamotée de libération de tout l'espace de rangement du compartiment (1), et en ce que la pièce profilée (2) est déplaçable suivant une direction perpendiculaire à la paroi de fond (1a) du compartiment (1), **caractérisé en ce que** la position de libération est escomptée dans la paroi du fond.

2. Dispositif selon la revendication 1, **caractérisé en ce que** la pièce profilée (2) est amenée manuellement à sa position escamotée par pression exercée sur celle-ci à l'encontre de la force de rappel d'un moyen élastique et comprend un moyen de verrouillage à sa position escamotée.

3. Dispositif selon la revendication 2, **caractérisé en ce que** le moyen de verrouillage est déverrouillable manuellement par pression.

4. Dispositif selon l'une des revendications précédentes, **caractérisé en ce que** la partie supérieure de la pièce profilée (2) est en affleurement avec la paroi de fond (1a) du compartiment (1) en position escamotée de la pièce profilée (2).

5. Dispositif selon l'une des revendications précédentes, **caractérisé en ce que** la pièce profilée (2) est en forme de bouton poussoir.

6. Dispositif selon l'une des revendications précédentes, **caractérisé en ce que** la paroi de fond (1a) du compartiment (1) est recouverte d'un tapis (3) en matériau à base de caoutchouc comportant une découpe (3a) de passage de la pièce profilée (2).

7. Dispositif selon l'une des revendications précédentes, **caractérisé en ce que** la pièce profilée (2) présente en section transversale une forme sensiblement triangulaire.

8. Dispositif selon l'une des revendications 1 à 6, **caractérisé en ce que** la pièce profilée (2) présente en section transversale une forme sensiblement carrée.

9. Dispositif selon l'une des revendications précédentes, **caractérisé en ce que** le compartiment (1) est de forme rectangulaire, carrée, circulaire ou triangulaire.

10. Dispositif selon l'une des revendications précédentes, **caractérisé en ce que** la pièce profilée (2) est disposée au centre du compartiment (1) de façon à définir quatre espaces de rangement ou de support distincts.

11. Dispositif selon l'une des revendications 2 à 10, **caractérisé en ce que** la pièce profilée (2) est montée mobile dans un boîtier (7) fixé sous la paroi de fond (1a) du compartiment (1) et comprend des organes de guidage (12) du déplacement relatif de la pièce profilée (2) et au moins une butée (5) de limitation du déplacement de la pièce profilée (2) à sa position saillante dans le compartiment (1), le moyen élastique de rappel (14) étant interposé entre la pièce profilée (2) et le boîtier (7).

12. Dispositif selon la revendication 11, **caractérisé en ce que** les organes de guidage (12) sont constitués par deux colonnes parallèles montées à coulissement respectivement dans deux cylindres de guidage (13) du boîtier (7) et le moyen élastique de rappel comprend deux ressorts hélicoïdaux (14) montés concentriquement respectivement aux deux paires de colonnes (12) et de cylindres associés (13).

13. Dispositif selon la revendication 11 ou 12, **caractérisé en ce que** le moyen de verrouillage précité est constitué par un téton (9) solidaire de la paroi supérieure de la pièce profilée (2) et ayant une extrémité libre conformée de façon à s'accrocher dans une partie à pince d'accrochage (11) solidaire du boîtier (7), en position escamotée de la pièce profilée (2).

14. Dispositif selon l'une des revendications 1 à 10, **caractérisé en ce que** la pièce profilée (2) est montée mobile dans un évidement de forme conjuguée (16) situé sous la paroi de fond (1a) du compartiment (1) et comprend au moins deux butées (17) de limitation de la course de la pièce (2) à sa position saillante, le moyen élastique de rappel (18) étant interposé entre la pièce profilée (2) et le fond de l'évidement (16).

15. Dispositif selon la revendication 14, **caractérisé en ce que** le moyen de verrouillage comprend un noyau (19) fixe logé dans la pièce profilée (2) en partie supérieure de celle-ci et coopérant avec une tige de verrouillage (20) montée pivotante relativement au compartiment (1) à son extrémité inférieure opposée à la pièce profilée (2) de façon à permettre à l'extrémité supérieure de la tige (20) d'accrocher le noyau fixe (19) pour maintenir la pièce profilée (2) à sa position escamotée.

16. Dispositif selon l'une des revendications précédentes, **caractérisé en ce qu'**il est montable dans la console centrale située entre les deux sièges avant du véhicule.

## Claims

1. Unit constituting a compartment for the storage or support of objects such as spectacles, mobile telephones, cash, keys, cups, bottles or similar fitted into a motor vehicle and opening at the top, the unit being such that it consists of a shaped component (2) which can be moved in the compartment (1) between a projecting position in which it separates the compartment (1) into at least two distinct areas of storage or support and a retracted position in which it releases the whole storage area of the compartment (1), with the shaped component (2) being able to be moved in a direction perpendicular to the bottom face (1a) of the compartment (1), **characterised by** the fact that the release position is retraction into the bottom face.

2. Unit according to claim 1, **characterised by** the fact that the shaped component (2) is manually placed in its retracted position by the exertion of pressure on the shaped component in opposition to the restoring force of an elastic device and includes a device to lock it in its retracted position.

3. Unit according to claim 2, **characterised by** the fact that the locking device can be manually released by the exertion of pressure.

4. Unit according to one of the previous claims, **characterised by** the fact that the top part of the shaped component (2) is flush with the bottom face (1a) of the compartment (1) when the shaped component is in a retracted position (2).

5. Unit according to one of the previous claims, **characterised by** the fact that the shaped component (2) takes the form of a push-button.

6. Unit according to one of the previous claims, **characterised by** the fact that the bottom face (1a) of the compartment (1) is covered with a sheet (3) of a rubber-based material which includes a cut-out (3a) for the passage of the shaped component (2).

7. Unit according to one of the previous claims, **characterised by** the fact that the transverse section of the shaped component (2) is roughly triangular in shape.

8. Unit according to one of claims 1 to 6, **characterised by** the fact that the transverse section of the shaped component (2) is roughly a square shape.

9. Unit according to one of the previous claims, **characterised by** the fact that the compartment (1) is rectangular, square, circular or triangular.

10. Unit according to one of the previous claims, **characterised by** the fact that the shaped component (2) is placed in the centre of the compartment (1) in such a way that it defines four distinct areas of storage or support.

11. Unit according to one of claims 2 to 10, **characterised by** the fact that the shaped component (2) is mounted in a movable way in a housing (7) attached below the bottom face (1a) of the compartment (1) and includes devices (12) to control the relative movement of the shaped component (2) and at least one stop (5) to limit the movement of the shaped component (2) to its position of projection from the compartment (1), the elastic restoring device (14) being positioned between the shaped component (2) and the housing (7).

12. Unit according to claim 11, **characterised by** the fact that the control devices (12) consist of two parallel columns mounted on a sliding mechanism in two guiding cylinders (13) located in the housing (7) and the elastic restoring device consists of two helical springs (14) mounted concentrically around two pairs of columns (12) and linked cylinders (13).

13. Unit according to claim 11 or 12, **characterised by** the fact that, when the moulded component (2) is in a retracted position, the above-mentioned locking device consists of a dog point (9) which is integral with the top face of the shaped component (2) and which has a free end which is shaped in such a way that it hooks on to an attachment clip (11) which is integral with the housing (7).

14. Unit according to one of claims 1 to 10, **characterised by** the fact that the shaped component (2) is mounted in a movable way in a twin recess (16) located below the bottom face (1a) of the compartment (1) and includes at least two stops (17) to limit the movement of the component (2) to position of projection, the elastic restoring device (18) being positioned between the shaped component (2) and the bottom of the recess (16).

15. Unit according to claim 14, **characterised by** the fact that the locking device consists of a fixed core (19) located in the top part of the shaped component (2) and operating with a lock bail (20) which is mounted in such a way that it pivots in relation to the compartment (1) with its lowest end opposite the shaped component (2) so that it allows the top end of the bail (20) to hook on to the fixed core (19) in order to keep the shaped component (2) in its retracted position.

16. Unit according to one of the previous claims, **characterised by** the fact that it can be fitted to the central console between the two front seats of the vehicle.

## Patentansprüche

1. Vorrichtung als Ablage- bzw. Aufnahmefach von Gegenständen, wie Brillen, tragbare Telefone, Münzen, Schlüssel, Becher, Getränkebehälter und dergleichen, die in einem Kraftfahrzeug angeordnet ist und im oberen Bereich frei liegt, wobei die Vorrichtung derart ist, dass sie ein Profilteil (2) enthält, das im Fach (1) zwischen einer vorstehenden Stellung zum Unterteilen des Fachs (1) in zumindest zwei unterschiedliche Ablage- bzw. Aufnahmeräume und einer versenkten Stellung zum Freigeben des gesamten Ablageraums des Fachs (1) verstellbar ist, und dass das Profilteil (2) in einer senkrecht zur Bodenwand (1a) des Fachs (1) verlaufenden Richtung verstellbar ist, **dadurch gekennzeichnet, dass** die Freigabestellung in der Bodenwand versenkt ist.

2. Vorrichtung nach Anspruch 1, **dadurch gekennzeichnet, dass** das Profilteil (2) manuell in seine versenkte Stellung durch einen Druck gebracht wird, der auf dieses entgegen der Rückstellkraft eines Federmittels ausgeübt wird, und ein Mittel zum Verriegeln in seiner versenkten Stellung enthält.

3. Vorrichtung nach Anspruch 2, **dadurch gekennzeichnet, dass** das Verriegelungsmittel durch Druck manuell entriegelbar ist.

4. Vorrichtung nach einem der vorangehenden Ansprüche, **dadurch gekennzeichnet, dass** in der versenkten Stellung des Profilteils (2) der obere Bereich des Profilteils (2) bündig mit der Bodenwand (1a) des Fachs (1) ist.

5. Vorrichtung nach einem der vorangehenden Ansprüche, **dadurch gekennzeichnet, dass** das Profilteil (2) druckknopfartig ausgebildet ist.

6. Vorrichtung nach einem der vorangehenden Ansprüche, **dadurch gekennzeichnet, dass** die Bodenwand (1a) des Fachs (1) mit einer Matte (3) aus einem Material auf Gummibasis bedeckt ist, die einen Ausschnitt (3a) zum Durchtritt des Profilteils (2) aufweist.

7. Vorrichtung nach einem der vorangehenden Ansprüche, **dadurch gekennzeichnet, dass** das Profilteil (2) im Querschnitt im wesentlichen dreieckförmig ist.

8. Vorrichtung nach einem der Ansprüche 1 bis 6, **dadurch gekennzeichnet, dass** das Profilteil (2) im Querschnitt im wesentlichen quadratisch ist.

9. Vorrichtung nach einem der vorangehenden Ansprüche, **dadurch gekennzeichnet, dass** das Fach (1) in seiner Form rechteckig, quadratisch, rund oder dreieckig ist.

10. Vorrichtung nach einem der vorangehenden Ansprüche, **dadurch gekennzeichnet, dass** das Profilteil (2) in der Mitte des Fachs (1) so angeordnet ist, dass es vier verschiedene Ablage- bzw. Aufnahmeräume bildet.

11. Vorrichtung nach einem der Ansprüche 2 bis 10, **dadurch gekennzeichnet, dass** das Profilteil (2) in einem Gehäuse (7) beweglich gelagert ist, das unter der Bodenwand (1a) des Fachs (1) befestigt ist, und Mittel (12) zum Führen der relativen Verlagerung des Profilteils (2) und zumindest eines Anschlags (5) zum Begrenzen der Verlagerung des Profilteils (2) in seiner in das Fach (1) vorstehende Stellung enthält, wobei das Rückstellfedermittel (14) zwischen dem Profilteil (2) und dem Gehäuse (7) eingefügt ist.

12. Vorrichtung nach Anspruch 11, **dadurch gekennzeichnet, dass** die Führungsmittel (12) aus zwei parallelen Stützen besteht, die in zwei jeweiligen Führungszylindern (13) des Gehäuses (7) gleitbeweglich gelagert sind, und dass das Rückstellfedermittel zwei Spiralfedern (14) enthält, die konzentrisch zu den zugeordneten Paaren von Stützen (12) bzw. Zylindern (13) gelagert sind.

13. Vorrichtung nach Anspruch 11 oder 12, **dadurch gekennzeichnet, dass** das genannte Verriegelungsmittel aus einem Zapfen (9) besteht, der fest mit der oberen Wand des Profilteils (2) verbunden ist und ein freies Ende aufweist, das so ausgeformt ist, dass es in versenkter Stellung des Profilteils (2) sich in ein Einhängeklemmteil (11) einhängt, das fest mit dem Gehäuse (7) verbunden ist.

14. Vorrichtung nach einem der Ansprüche 1 bis 10, **dadurch gekennzeichnet, dass** das Profilteil (2) in einer Ausnehmung entsprechender Form (16) beweglich gelagert ist, die sich unter der Bodenwand (1a) des Fachs (1) befindet, und dass es zumindest zwei Anschläge (17) als Wegbegrenzung des Teils (2) in seiner vorstehenden Stellung enthält, wobei das Rückstellfedermittel (18) zwischen dem Profilteil (2) und dem Boden der Ausnehmung (16) eingefügt ist.

15. Vorrichtung nach Anspruch 14, **dadurch gekennzeichnet, dass** das Verriegelungsmittel einen festen Kern (19) enthält, der im Profilteil (2) in dessen oberen Bereich aufgenommen ist und mit einem Verriegelungsstift (20) zusammenwirkt, der an seinem unteren, dem Profilteil (2) gegenüberliegenden Ende relativ zum Fach (1) verschwenkbar gelagert ist, so dass das obere Ende des Stifts (20) den festen Kern (19) einhängen kann, um das Profilteil (2) in seiner versenkten Stellung zu halten.

16. Vorrichtung nach einem der vorangehenden Ansprüche, **dadurch gekennzeichnet, dass** sie in der Mittelkonsole montierbar ist, die sich zwischen den beiden Vordersitzen des Fahrzeugs befindet.
